# EUROPEAN PATENT APPLICATION

(11) **EP 4 707 333 A1**
(43) Date of publication of application: **11.03.2026**
(21) Application number: 24907622.5
(22) Date of filing: 28.05.2024
(51) Int. Cl.: C08L 3/10, C08K 5/09, C08K 5/00, C08L 101/16, C08J 5/18

(54) **THERMOPLASTIC STARCH COMPOSITION AND BIODEGRADABLE RESIN COMPOSITION COMPRISING SAME**

(30) Priority: 21.12.2023 KR 20230188376
(71) Applicant: Daesang Corporation, Seoul 03130 (KR)
(72) Inventor: YANG, Da Hae, Seoul 07789 (KR); LEE, Seul Gi, Seoul 07789 (KR); KIM, Se Wook, Seoul 07789 (KR); HUR, Sung Hwa, Seoul 07789 (KR); HONG, Sung Jun, Seoul 07789 (KR); HAM, Choong Hyun, Seoul 07789 (KR)
(74) Representative: Fuchs Patentanwälte Partnerschaft mbB
(86) International application number: PCT/KR2024/007217
(87) International publication number: WO 2025/135330

(57) **Abstract**

The present invention relates to: a thermoplastic starch composition which has improved melt flow characteristics and processability and comprises a modified starch having a controlled molecular weight due to treatment with an acid; and a biodegradable resin composition and a film which have excellent mechanical properties and comprise the thermoplastic starch composition.

## Description

### [Technical Field]

The present invention relates to: a thermoplastic starch composition with improved melt flow characteristics and processability, which includes a modified starch having a controlled molecular weight through acid treatment; and a biodegradable resin composition and a film, which have excellent mechanical properties and include the thermoplastic starch composition.

### [Background Art]

Biodegradable polymers can be classified into petroleum-based biodegradable polymers and bio-based biodegradable polymers. Among them, there is relatively high interest in environmentally friendly and renewable bio-based polymers. Polymers that are completely biodegradable in the natural environment contain functional groups in their main chain structure that can be decomposed by microorganisms. Among them, polyester-based polymers are the most extensively studied due to their excellent processability and the ease with which their biodegradability can be controlled. For example, polylactic acid (PLA) is a bio-based biodegradable polymer synthesized from lactic acid obtained by fermenting corn starch. PLA has a global market size of approximately 100,000 tons and is being widely applied in areas such as food packaging materials and containers, and even general plastic applications such as electronic device cases. However, PLA resin has drawbacks such as poor moldability, insufficient mechanical strength, and low heat resistance. Thus, thin-film products made from PLA are easily broken and have low temperature resistance, causing deformation when external temperatures rise.

Additionally, polybutylene adipate-co-terephthalate (PBAT), the most widely used petroleum-based biodegradable polyester polymer, is a copolymer resin containing aliphatic and aromatic components. While PBAT exhibits relatively good mechanical properties and processability, it has the disadvantages of weak structural strength and high manufacturing costs. To overcome these limitations of polyester resins such as inadequate physical properties and high manufacturing costs compared to non-biodegradable polymers, various research efforts have focused on incorporating eco-friendly biomass materials into composite formulations.

Starch, as a representative plant-based biomass, has been widely explored for blending with biodegradable resins to reduce costs and enhance biodegradability. However, when starch is applied to biodegradable resins, the inherent hydrophilicity of starch and the deterioration of processibility can lead to reduced physical properties, which imposes a limitation on the amount of starch that can be added and results in lowered product quality.

To address these issues, numerous attempts have been made to impart thermoplasticity to starch by reacting it with plasticizers and then blending it with biodegradable resins to produce composite materials. However, these efforts have yet to meet the standards required by the industry.

Additionally, natural starch is commonly used as the raw material for thermoplastic starch, but due to its high molecular weight and viscosity, it adversely affects reactions with various additives during reactive extrusion and causes poor processability. Therefore, there is a need to develop a method of treating starch that can resolve these problems.

### [Disclosure]

### [Technical Problem]

The present invention aims to improve melt flowability and processability in the preparation of thermoplastic starch compositions by treating natural starch with acid to control its molecular weight.

The present invention also aims to provide a biodegradable resin composition and a film, which have enhanced mechanical strength and are manufactured using a thermoplastic starch composition that includes acid-treated modified starch.

### [Technical Solution]

One aspect of the present invention provides a thermoplastic starch composition including a modified starch with a controlled molecular weight, a plasticizer, a compatibilizer, and a reaction initiator, wherein the modified starch is prepared by a hydrolysis reaction of starch with one or more acids selected from hydrochloric acid, sulfuric acid, and acetic acid.

According to an embodiment, the hydrolysis reaction between the acid and the starch may be performed at an acid: starch molar ratio of 0.9:1 to 5.4:1.

According to an embodiment, the hydrolysis reaction may be performed at a temperature of 40 °C to 60 °C.

According to an embodiment, the acid-hydrolyzed modified starch may have a final viscosity of 200 to 800 BU, as determined by analyzing an 8% starch slurry that has undergone gelatinization using a Brabender Visco/Amylograph (Germany).

According to an embodiment, the starch usable in the thermoplastic starch composition may be one or more selected from the group consisting of corn starch, waxy corn starch, rice starch, potato starch, tapioca starch, wheat starch, sweet potato starch, and modified starches thereof, but is not limited thereto.

According to an embodiment, the plasticizer usable in the thermoplastic starch composition may be one or more selected from the group consisting of glycerin, ethylene glycol, sorbitol, and pentaerythritol, but is not limited thereto.

According to an embodiment, the compatibilizer usable in the thermoplastic starch composition may be one or more selected from carboxylic acids or carboxylic acid anhydrides, but is not limited thereto.

According to an embodiment, in the thermoplastic starch composition, the content of the modified starch may be 70 to 90 wt%, the content of the plasticizer may be 5 to 30 wt%, the content of the compatibilizer may be 0.1 to 1.0 wt%, and the content of the reaction initiator may be 0.01 to 1.0 wt%.

Another aspect of the present invention provides a biodegradable resin composition including 20 to 40 wt% of the thermoplastic starch including a molecular weight-controlled modified starch and 60 to 80 wt% of a biodegradable resin.

The biodegradable resin that can be used may be one or more selected from the group consisting of polybutylene adipate terephthalate, polylactic acid, polycaprolactone, polybutylene succinate, polyglycolic acid, polyhydroxyalkanoate, polyhydroxybutyrate, copolymers thereof, and mixtures thereof, but is not limited thereto.

### [Advantageous Effects]

The acid-treated modified starch according to the present invention can provide a thermoplastic starch composition with improved melt flowability and processability by controlling the molecular weight of the starch.

The acid-treated modified starch according to the present invention can replace natural starch as a raw material in the preparation of thermoplastic starch, and when mixed with biodegradable resins to produce composite materials, it improves mechanical strength and durability compared to resin compositions using conventional thermoplastic starch, making it applicable to various industrial fields.

### [Best Mode]

Hereinafter, the present invention will be described in detail with reference to examples below. However, the following examples are provided for illustrative purposes to help understand the present invention and are not intended to limit the scope of the present invention. The present invention can be subject to various modifications and can be implemented in different forms, and it should be understood that all modifications, equivalents, or substitutes within the spirit and technical scope of the present invention are included.

Unless otherwise defined, all terms, including technical and scientific terms, used herein have the same meaning as commonly understood by a person of ordinary skill in the art to which the present invention pertains. It will be further understood that terms, such as those defined in commonly used dictionaries, should be interpreted as having a meaning that is consistent with their meaning in the context of the relevant art and will not be interpreted in an idealized or overly formal sense unless expressly defined otherwise herein.

Generally, natural starch is used as the raw material for thermoplastic starch. Natural starch is characterized by its high molecular weight and high viscosity, which adversely affect reactions with various additives during reactive extrusion and also reduce processability due to the high viscosity. To address these issues, the molecular weight of starch is controlled through acid treatment, thereby improving the melt flowability and processability of the thermoplastic starch composition, and enhancing the mechanical strength of the biodegradable resin composition prepared by mixing thermoplastic starch with a biodegradable resin. The acid-treated modified starch of the present invention may replace natural starch as a raw material in the preparation of thermoplastic starch, and may provide a biodegradable composite material with higher strength than conventional thermoplastic starch.

According to an embodiment of the present invention, the thermoplastic starch composition includes a modified starch with a controlled molecular weight, a plasticizer, a compatibilizer, and a reaction initiator, wherein the modified starch is prepared by a hydrolysis reaction of starch with one or more acids selected from hydrochloric acid, sulfuric acid, and acetic acid.

The hydrolysis reaction of starch is mainly performed using hydrochloric acid or sulfuric acid, which randomly cleave α1-4 or α1-6 glycosidic bonds, leading to reduced viscosity and decreased molecular weight. As a result, the shortened molecular chains increase the flexibility and melt flowability of the thermoplastic starch.

According to an embodiment of the present invention, in the thermoplastic starch composition, the content of the modified starch may be 70 to 90 wt%, the content of the plasticizer may be 5 to 30 wt%, the content of the compatibilizer may be 0.1 to 1.0 wt%, and the content of the reaction initiator may be 0.01 to 1.0 wt%.

As a specific example, the hydrolysis reaction between the acid and the starch may be performed at an acid: starch molar ratio of 0.9:1 to 5.4:1.

When the molar ratio of acid to starch is less than 0.9:1, the viscosity remains similar to that of natural starch, and molecular weight control may not be achieved. When the molar ratio exceeds 5.4:1, excessive hydrolysis reduces the elongation when applied as a film, and the increased number of polar chain ends promotes the penetration of water molecules into the outer surface of the film.

Additionally, the hydrolysis reaction between acid and starch may be performed at a temperature of 40 °C to 60 °C. At temperatures below 40 °C, the reaction efficiency of hydrochloric acid is very low. At temperatures above 60 °C, the starch gelatinizes, making it difficult to obtain the modified starch.

The acid-hydrolyzed modified starch has a final viscosity of 400 to 800 BU, as determined by analyzing an 8% starch slurry that has undergone gelatinization using a Brabender Visco/Amylograph (Germany). This is lower than natural starch, thus improving melt flowability and processability.

The starch usable for acid treatment may be one or more selected from the group consisting of corn starch, waxy corn starch, rice starch, potato starch, tapioca starch, wheat starch, and sweet potato starch, but is not limited thereto.

When less than 70 wt% of the modified starch is used in the thermoplastic starch composition, an excessive amount of non-starch raw materials may be required, raising the cost and decreasing economic feasibility. When more than 90 wt% of the modified starch is used, some ungelatinized starch may remain, which may deteriorate the physical properties during the preparation of thermoplastic starch and biodegradable composite resins.

The plasticizer usable in the thermoplastic starch composition may be one or more selected from the group consisting of glycerin, ethylene glycol, sorbitol, and pentaerythritol, but is not limited thereto. Based on the total weight of the thermoplastic starch composition, the plasticizer is preferably used in an amount of 1 to 30 wt%. When the content of the plasticizer is below this range, plasticization does not occur. When the content of the plasticizer exceeds this range, over-plasticization occurs and the composition becomes a paste.

The compatibilizer usable in the thermoplastic starch composition may be one or more selected from carboxylic acids or carboxylic acid anhydrides. For example, maleic anhydride and tartaric acid may be used. Based on the total weight of the thermoplastic starch composition, the compatibilizer is preferably used in an amount of 0.1 to 1.0 wt%.

The reaction initiator usable in the thermoplastic starch composition may be, for example, one or more peroxide-based initiators selected from the group consisting of benzoyl peroxide, acetyl peroxide, dilauryl peroxide, di-t-butyl peroxide, cumyl peroxide, di-t-butyl hydroperoxide, dibenzoyl peroxide, succinic acid peroxide, dilauryl peroxide, didecanoyl peroxide, dicumyl peroxide, 2,5-dimethyl-2,5-di(t-butylperoxy)hexane, α-cumyl peroxyneodecanoate, 1,1-dimethyl-3-hydroxybutylperoxy-2-ethylhexanoate, t-amyl peroxybenzoate, t-butyl peroxypivalate, 2,5-dihydroperoxy-2,5-dimethylhexane, cumene hydroperoxide, and 1,3-bis(t-butylperoxyisopropyl)benzene, but is not limited thereto. Based on the total weight of the thermoplastic starch composition, the reaction initiator is preferably used in an amount of 0.01 to 1.0 wt%.

The thermoplastic starch composition of the present invention may be extruded using a twin-screw extruder and the like to produce pellets, which is preferable as it provides convenience in processing or product manufacturing when mixing with biodegradable resins.

According to an embodiment of the present invention, after preparing a thermoplastic starch composition including acid-treated modified starch, it is possible to mix it with a biodegradable resin to prepare a biodegradable resin composition. The biodegradable resin composition may be prepared by mixing 20 to 40 wt% of the thermoplastic starch composition with 60 to 80 wt% of the biodegradable resin.

The biodegradable resin usable in the biodegradable resin composition may be one or more selected from the group consisting of polybutylene adipate terephthalate (PBAT), polylactic acid (PLA), polybutylene succinate (PBS), polycaprolactone (PCL), polyglycolic acid (PGA), polyhydroxyalkanoate (PHA), polyhydroxybutyrate (PHB), copolymers thereof, and mixtures thereof, but is not limited thereto.

The biodegradable resin composition may further include mixing the thermoplastic starch composition with the biodegradable resin and extruding the mixture to produce pellets, which may then be molded into biodegradable films using a film molding machine.

The present invention reduces the molecular weight of starch through acid treatment, thereby improving the reactivity of the thermoplastic starch and enhancing the mechanical strength of the resin composition prepared by mixing it with a biodegradable resin. The acid-treated modified starch of the present invention may replace natural starch as a raw material in the preparation of thermoplastic starch and may provide a biodegradable composite material with higher strength than conventional thermoplastic starch.

According to an embodiment, the tensile strength of the compound manufactured using the biodegradable resin composition including a molecular weight-controlled modified starch may be 17 to 30 N/mm², and its elongation may be 350 to 600%.

Another aspect of the present invention provides a biodegradable film manufactured using the biodegradable resin composition including a molecular weight-controlled modified starch.

According to an embodiment, the tensile strength of the biodegradable film may be 20 to 30 N/mm², and its elongation may be 700 to 900%.

Thus, the biodegradable resin composition including an acid-treated, molecular weight-controlled modified starch exhibits improved mechanical strength and durability, and may be used in various products such as disposable bags, disposable packaging, tablecloths, and mulch films.

### [Modes of the Invention]

Hereinafter, the present invention will be described in more detail through examples and comparative examples. However, these are provided solely for illustrative purposes and are not to be construed as limiting the scope of the present invention.

### <Example 1>

### A) Preparation of acid-thinned modified starch

A suspension of corn starch (Daesang Corporation) with a starch concentration of 38 wt% was heated to 50 °C, and hydrochloric acid was added to achieve a hydrochloric acid: starch molar ratio of 0.9:1 to 5.4:1, followed by acid hydrolysis for 1 to 3 hours. Afterward, a 4 wt% sodium hydroxide aqueous solution was added to dilute the suspension, and the pH of the starch suspension was adjusted to 5.0 to terminate the hydrolysis reaction by acid treatment. The reaction suspension was filtered, dehydrated, and dried to obtain the acid-thinned modified starch.

### B) Preparation of thermoplastic starch composition

85 parts by weight of the acid-treated modified starch and 15 parts by weight of glycerin were mixed and charged into a mixing chamber. Maleic anhydride at 0.5 phr and a peroxide initiator at 0.1 phr, based on the total weight of the mixture, were added, and the mixture was stirred for 10 minutes in the mixing chamber.

The uniformly mixed composition was fed into a twin-screw extruder. The barrel temperature of the extruder was set to 135 to 160 °C, the main screw speed was 150 rpm, and the feed rate was 3 rpm. The extrudate was pelletized to prepare thermoplastic starch.

### C) Preparation of biodegradable resin composition

30 parts by weight of the thermoplastic starch composition and 70 parts by weight of PBAT were mixed. The uniformly mixed composition was fed into a twin-screw extruder. The barrel temperature of the extruder was 160 °C, the main screw speed was 290 rpm, and the feed rate was 40 g/min. The extrudate discharged through an extrusion die was water-cooled using a water channel and pelletized. The pellets were dried at 60 °C for more than 24 hours to prepare compound specimens.

Additionally, the biodegradable resin composition was injection molded using a specimen molding machine to prepare biodegradable test specimens. The specimen molding machine was operated at a temperature of 210 to 220 °C.

### D) Preparation of biodegradable film

The biodegradable composition was fed into a film molding machine to manufacture a biodegradable film with an average thickness of 25 to 35 µm. The film molding machine temperature was 150 to 170 °C, and the raw material feed rate was 700 to 800 rpm.

### <Example 2>

### A) Preparation of acid-thinned modified starch

A suspension of corn starch (Daesang Corporation) with a starch concentration of 38 wt% was heated to 50 °C, and hydrochloric acid was added to achieve a hydrochloric acid: starch molar ratio of 0.9:1 to 5.4:1, followed by acid hydrolysis for 1 to 3 hours. Afterward, a 4 wt% sodium hydroxide aqueous solution was added to dilute the suspension, and the pH of the starch suspension was adjusted to 5.0 to terminate the hydrolysis reaction by acid treatment. The reaction suspension was filtered, dehydrated, and dried to obtain the acid-thinned modified starch.

### B) Preparation of thermoplastic starch composition

85 parts by weight of acid-treated modified starch and 15 parts by weight of glycerin were mixed and charged into a mixing chamber. Maleic anhydride at 0.3 phr, a peroxide initiator at 0.1 phr, and tartaric acid at 0.2 phr, based on the total weight of the mixture, were added, and the mixture was stirred for 10 minutes in the mixing chamber.

The uniformly mixed composition was fed into a twin-screw extruder. The barrel temperature of the extruder was set to 135 to 160 °C, the main screw speed was 150 rpm, and the feed rate was 40 g/min. The extrudate was pelletized to prepare thermoplastic starch.

### C) Preparation of biodegradable resin composition

40 parts by weight of the thermoplastic starch composition and 60 parts by weight of PBAT were mixed. The uniformly mixed composition was fed into a twin-screw extruder. The barrel temperature of the extruder was 160 °C, the main screw speed was 290 rpm, and the feed rate was 40 g/min. The extrudate discharged through an extrusion die was water-cooled using a water channel and pelletized. The pellets were dried at 60 °C for more than 24 hours to prepare compound specimens.

Additionally, the biodegradable resin composition was injection molded using a specimen molding machine to prepare biodegradable test specimens. The specimen molding machine was operated at a temperature of 210 to 220 °C.

### D) Preparation of biodegradable film

The biodegradable composition was fed into a film molding machine to manufacture a biodegradable film with an average thickness of 27 µm. The film molding machine was operated at a temperature of 150 to 170 °C, and the raw material feed rate was 700 to 800 rpm.

### <Comparative Example 1>

### B) Preparation of thermoplastic starch composition

85 parts by weight of normal corn starch and 15 parts by weight of glycerin were mixed and charged into a mixing chamber. Maleic anhydride at 0.3 phr, a peroxide initiator at 0.1 phr, and tartaric acid at 0.2 phr, based on the total weight of the mixture, were added, and the mixture was stirred for 10 minutes in the mixing chamber.

The uniformly mixed composition was fed into a twin-screw extruder. The barrel temperature of the extruder was set to 135 to 160 °C, the main screw speed was 150 rpm, and the feed rate was 40 g/min. The extrudate was pelletized to prepare thermoplastic starch.

### C) Preparation of biodegradable resin composition

30 parts by weight of the thermoplastic starch composition and 70 parts by weight of PBAT were mixed. The uniformly mixed composition was fed into a twin-screw extruder. The barrel temperature of the extruder was 160 °C, the main screw speed was 290 rpm, and the feed rate was 40 g/min. The extrudate discharged through an extrusion die was water-cooled using a water channel and pelletized. The pellets were dried at 60 °C for more than 24 hours to prepare compound specimens.

Additionally, the biodegradable resin composition was injection molded using a specimen molding machine to prepare biodegradable test specimens. The specimen molding machine was operated at a temperature of 210 to 220 °C.

### D) Preparation of biodegradable film

The biodegradable composition was fed into a film molding machine to manufacture a biodegradable film with an average thickness of 27 µm. The film molding machine temperature was 150 to 170 °C, and the raw material feed rate was 700 to 800 rpm.

### <Comparative Example 2>

### B) Preparation of thermoplastic starch composition

85 parts by weight of normal corn starch and 15 parts by weight of glycerin were mixed and charged into a mixing chamber. Maleic anhydride at 0.5 phr and a peroxide initiator at 0.1 phr, based on the total weight of the mixture, were added, and the mixture was stirred for 10 minutes in the mixing chamber.

The uniformly mixed composition was fed into a twin-screw extruder. The barrel temperature of the extruder was set to 135 to 160 °C, the main screw speed was 150 rpm, and the feed rate was 40 g/min. The extrudate was pelletized to prepare thermoplastic starch.

### C) Preparation of biodegradable resin composition

40 parts by weight of the thermoplastic starch composition and 60 parts by weight of PBAT were mixed. The uniformly mixed composition was fed into a twin-screw extruder. The barrel temperature of the extruder was 160 °C, the main screw speed was 290 rpm, and the feed rate was 40 g/min. The extrudate discharged through an extrusion die was water-cooled using a water channel and pelletized. The pellets were dried at 60 °C for more than 24 hours to prepare compound specimens.

Additionally, the biodegradable resin composition was injection molded using a specimen molding machine to prepare biodegradable test specimens. The specimen molding machine was operated at a temperature of 210 to 220 °C.

### D) Preparation of biodegradable film

The biodegradable composition was fed into a film molding machine to manufacture a biodegradable film with an average thickness of 27 µm. The film molding machine temperature was 150 to 170 °C, and the raw material feed rate was 700 to 800 rpm.

### <Evaluation Example>

The measurement results of the physical properties of the thermoplastic starch compositions and biodegradable resin compositions according to Examples and Comparative Examples are shown in Tables 1 and 2 below.

### [Starch physical property evaluation]

### 1) Gelatinization viscosity (Amylograph)

A starch slurry was prepared by suspending starch from Examples and Comparative Examples in water at a dry weight concentration of 8 wt%. The Brabender Amylograph conditions were as follows: the slurry was heated from 50 °C to 95 °C at a rate of 3 °C per minute and maintained at 95 °C for 20 minutes. The slurry was then cooled from 95 °C to 50 °C at a rate of 3 °C per minute and maintained at 50 °C for 10 minutes to measure the final viscosity.

### [Physical property evaluation of injection-molded specimens of biodegradable composite]

### 1) Tensile strength evaluation

Biodegradable injection-molded specimens were prepared according to the preparation method of Examples, and tensile strength and elongation were measured using a universal testing machine (UTM) following standard tensile testing procedures.

### 2) Impact strength evaluation

Biodegradable composite specimens prepared according to Examples were tested for impact strength using the Notched IZOD impact test method.

### [Film physical property evaluation]

Biodegradable films manufactured by the method of Examples were cut into specimens of standardized size, and tensile strength and elongation were measured using an Instron tensile tester.

**[Table 1]**

| Classification | | | Comparative Example 1 | Example 1 |
|---|---|---|---|---|
| Modification condition | Acid treatment molar ratio (acid: starch) | | 0 | 1.18:1 |
| | Reaction time (h) | | 0 | 3 |
| | 8% Final viscosity (BU, 50 °C) | | 1,156 | 697 |
| | MFI (g/10 min, 200 °C) | | 0.0 | 1.5 |
| COMPOUND | Mixing ratio | TPS | 30 | 30 |
| | | PBAT | 70 | 70 |
| | Tensile strength (MPa) | | 21.6 | 24.5 |
| | Elongation (%) | | 399.9 | 519.2 |
| Film | Tensile strength (MPa) | | 28.7 | 34.0 |
| | Elongation (%) | | 875.0 | 811.5 |

**[Table 2]**

| Classification | | | Comparative Example 2 | Example 2 |
|---|---|---|---|---|
| Modification condition | Acid treatment molar ratio (acid: starch) | | 0 | 1.18:1 |
| | Reaction time (h) | | 0 | 3 |
| | 8% Final viscosity (BU, 50 °C) | | 1,156 | 697 |
| | MFI (g/10 min, 200 °C) | | 0.0 | 1.5 |
| COMPOUND | Mixing ratio | TPS | 40 | 40 |
| | | PBAT | 60 | 60 |
| | Tensile strength (MPa) | | 13.6 | 17.3 |
| | Elongation (%) | | 306.0 | 353.4 |
| Film | Tensile strength (MPa) | | 19.7 | 23.2 |
| | Elongation (%) | | 441.5 | 830.7 |

As shown in the above table, the thermoplastic starch compositions in Examples 1 and 2, which include acid-treated starch with a controlled molecular weight, exhibited excellent processability, and the mechanical properties of the biodegradable resin compositions (compounds) and biodegradable films manufactured using these compositions were improved.

## Claims

1. A thermoplastic starch composition comprising:
a modified starch with a controlled molecular weight;
a plasticizer;
a compatibilizer; and
an initiator,
wherein the modified starch is prepared by a hydrolysis reaction of starch with one or more acids selected from hydrochloric acid, sulfuric acid, and acetic acid.

2. The thermoplastic starch composition of claim 1, wherein the hydrolysis reaction between the acid and the starch is performed at an acid: starch molar ratio of 0.9:1 to 5.4:1.

3. The thermoplastic starch composition of claim 1, wherein the hydrolysis reaction is performed at a temperature of 40 °C to 60 °C.

4. The thermoplastic starch composition of claim 1, wherein the modified starch has a viscosity of 200 to 800 BU.

5. The thermoplastic starch composition of claim 1, wherein the plasticizer is one or more selected from the group consisting of glycerin, ethylene glycol, sorbitol, and pentaerythritol.

6. The thermoplastic starch composition of claim 1, wherein the compatibilizer is one or more selected from carboxylic acids or carboxylic acid anhydrides.

7. The thermoplastic starch composition of claim 1, wherein the modified starch is included in an amount of 70 to 90 wt%, the plasticizer is included in an amount of 5 to 30 wt%, the compatibilizer is included in an amount of 0.1 to 1.0 wt%, and the reaction initiator is included in an amount of 0.01 to 1.0 wt%.

8. A biodegradable resin composition comprising:
20 to 40 wt% of the thermoplastic starch composition of claim 1; and
60 to 80 wt% of a biodegradable resin.

9. The biodegradable resin composition of claim 8, wherein the biodegradable resin is one or more selected from the group consisting of polybutylene adipate terephthalate, polylactic acid, polycaprolactone, polybutylene succinate, polyglycolic acid, polyhydroxyalkanoate, polyhydroxybutyrate, copolymers thereof, and mixtures thereof.

10. A biodegradable film manufactured using the biodegradable resin composition of claim 8.
